# EUROPEAN PATENT APPLICATION

(11) **EP 3 617 418 A1**
(43) Date of publication of application: **04.03.2020**
(21) Application number: 17908095.7
(22) Date of filing: 05.09.2017
(51) Int. Cl.: E04D 1/28, E04D 11/00

(54) **INDIVIDUAL MULTI-LAYERED ROOFING TILE**

(30) Priority: 26.04.2017 RU 2017114539
(71) Applicant: Limited Liability Company "Thermotile", Moscow 143026 (RU)
(72) Inventor: BESPYATY, Anatoly Vladimirovich, Moscow 125080 (RU); EVSTEGNEEV, Kirill Viktorovich, Moscow 125445 (RU)
(74) Representative: Berggren Oy, Helsinki & Oulu
(86) International application number: PCT/RU2017/000649
(87) International publication number: WO 2018/199801

(57) **Abstract**

The invention relates to construction and can be used in the installation of roof coverings for industrial and public buildings and structures. A roofing tile comprises a lower protective layer made of polyethylene terephthalate and having a metallized base, a technical layer made of high-density polyethylene, a layer of cardboard, a heat and sound insulating layer made of polyurethane foam, and an upper protective layer made of polyethylene terephthalate. The metallized base is made of aluminum. The upper protective layer is painted throughout its entire thickness with modified UV stabilizers and fire retardant agents. The claimed invention provides enhanced heat insulating and sound insulating properties.

## Description

### Technical field

The present disclosure relates to construction and can be used in construction of industrial and public buildings structures roofing.

### Background

Conventionally, there is known a metal roofing (see [1] RF patent for utility model No. 95708, IPC E04D11/02, published 10.07.2010) consisting of upper and lower profiled flooring mainly with trapezoidal corrugations, thermal insulation, anti-condensation film and discrete installed support elements along the roofing run and connected to it via the lower profiled flooring located forming ventilated space under the upper profiled flooring. The upper profiled flooring can be made with a polymer coating. On the lower profiled flooring, thermal insulation, mainly from a light insulating material is laid out, for example in the form of plates made of polyurethane foam or expanded polystyrene. The upper profiled flooring is supported by a metal roofing strip, consisting of interconnected upper and lower elements, between which an anti-condensation film is placed.

Also, in the related technologies, the roofing panel is known (see [2] RF patent for utility model No. 148121, IPC E04D11/00, published on November 27, 2014) consisting of the following: internal profiled metal sheet, heat-insulating layer, additional metal sheet, waterproofing layer; all layers are fastened together with special glue or by self-tapping screws.

Disadvantages of the above analogues are the high cost of the roof (two metal sheets, necessity to provide ventilation, because otherwise the metal is corroded), heavy weight (two sheets), necessity to fasten layers with special glue or self-tapping screws, impossibility to give the product a classic tile-piece shape. Thus, all of the above roofing are molded material, but not tile-pieces.

The closest analogous solution in terms of totality of essential features is the roofing layers (see [3] RF patent for utility model No. 14595, IPC E04D5/00, published August 10, 2000) containing successively laid out on the base: a vapour seal covering, a thermal insulation layer made of foam based on polyurethane foam, a roof covering; the coating additionally includes a layer made of a flat asbestos-cement sheet between the thermal insulation layer and roof covering. The base is made, for example, from profiled flooring or reinforced concrete slabs. The asbestos cement sheet is made with gating holes through which the liquid polyurethane foam is injected into the interlayer space between the layers of thermal insulation and the asbestos cement sheet, which when cured provides a sound bonding of the layers. Roof covering is glued to the asbestos sheet.

Drawbacks of the prototype are: use of a flat asbestos-cement sheet, which is an unhealthy material, which is also highly brittle and quite heavy. A flat sheet does not allow to produce shaping of classical tiles, also the sheet is molded, which implies special requirements for transportation, loading and lifting to the roof. The material is not a tile-piece, but a multilayered roofing sheet.

### Summary

The object of the claimed invention is to provide a roof covering allowing to protect attic rooms from over-heating in summer and cooling in winter, in private inclined roofing construction, while maintaining a classical shape.

The effect of the claimed invention is an increase in thermal insulation and soundproof properties.

The effect is achieved due to the fact that the roofing tile comprises a lower protective layer made of polyethylene terephthalate with a metallized base, a technical layer made of high-density polyethylene, a cardboard layer, a heat and sound insulating layer made of a polyurethane foam, and an upper protective layer made of polyethylene terephthalate.

Also, the effect is achieved due to use of aluminum in the metallized base.

Also, the effect is achieved due to the fact that the upper protective layer is painted over the entire thickness with modified UV stabilizers and flame retardants.

### Brief description of the drawings

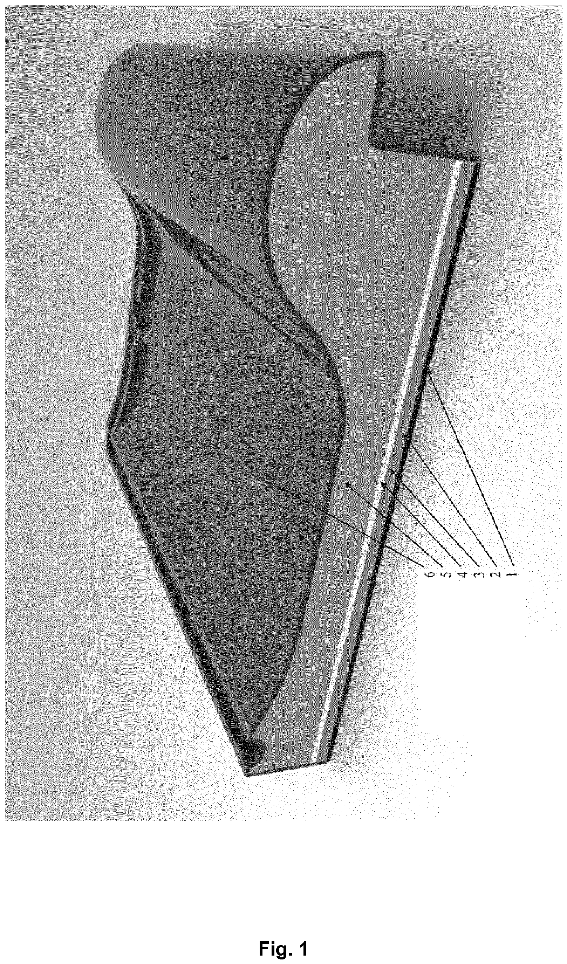

Fig. 1 shows a sectional view of a multi-layered roof tile.

The following items are presented in the Figure:
*1 - metallized base;*
*2 - lower protective layer made of polyethylene terephthalate;*
*3 - technical layer made of high-density polyethylene;*
*4 - cardboard layer;*
*5 - heat and sound insulating inner layer made of polyurethane foam;*
*6 - upper protective layer made of polyethylene terephthalate.*

### Detailed description of the invention

In the embodiment of the invention, a roofing tile contains a lower protective layer (2) made of polyethylene terephthalate with a metallized base (1) made preferably of aluminum (Fig. 1). Lower protective layer (2), serving also as a substrate for metallization, protects against mechanical damage, and the metallized base (1) reflects infrared radiation back inside the house (premises).

Technical layer (3) made of high-density polyethylene is placed upon the lower protective layer, and the cardboard layer (4) is laid-out on it. Heat and sound insulating inner layer made of polyurethane foam (5) is laid-out over the cardboard layer (4). Cardboard layer (4) absorbs the two-component polyurethane foam, thereby increasing adhesion to the high-density polyethylene layer (3), which in turn bonds the cardboard layer and the lower protective layer (2).

The upper protective layer (6) of polyethylene terephthalate is preferably painted over the entire thickness with modified UV stabilizers and flame retardants and is laid out on top of the heat and sound-insulating inner layer (5). The upper protective layer (6) weight is several times lower than that of metal or asbestos-cement sheets (used in analogous products). Note that the layer (6) is resistant to corrosion, mold and fungus do not grow on it; the layer (6) protects from external mechanical impacts and ultraviolet exposure, thereby increasing thermal insulation and soundproof properties. At the same time, a protective layer made of polyethylene terephthalate makes it possible to give the roofing a classical look of a roofing material - tiles.

Use of non-hygroscopic heat-insulating material of polyurethane foam in the form of heat and sound-insulating layer (5), which at the time of foaming and polymerization has strong adhesive properties, allows reliable connecting (bonding) the upper (6) and lower (2) protective layers of polyethylene terephthalate, strengthened by technical (3) and cardboard (4) layers.

Polymerized polyurethane foam, filling the entire internal volume of the product, gives rigidity to the resulting structure, which allows the roofing to withstand high loads (for example, when walking on the roof).

The inner layer (5) of two-component polyurethane foam assures low thermal conductivity of the product, high noise absorption, as well as filling the entire internal volume of the product, increasing its rigidity.

## Claims

1. A roofing tile comprising a lower protective layer made of polyethylene terephthalate with a metallized base, a technical layer made of high-density polyethylene, a cardboard layer, a heat and sound insulating layer made of a polyurethane foam, and an upper protective layer made of polyethylene terephthalate.

2. The roofing tile according to claim 1, wherein the metallized base is made of aluminum.

3. The roofing tile according to claim 1, wherein the upper protective layer is painted over the entire thickness with modified UV stabilizers and flame retardants.
